# EUROPÄISCHE PATENTSCHRIFT

(11) **EP 0 887 397 B1**
(45) Veröffentlichungstag und Bekanntmachung des Hinweises auf die Patenterteilung: **19.11.2003**
(21) Anmeldenummer: 98202066.1
(22) Anmeldetag: 22.06.1998
(51) Int. Cl.: C09K 11/02, H01J 29/20, H01J 29/18, H01J 17/49

(54) **UV-Leuchtstoff mit Polyphosphatbeschichtung**
UV phosphor with a polyphosphate coating
Matière luminescente aux UV ayant un revêtement de polyphosphate

(30) Priorität: 28.06.1997 DE 19727607
(43) Veröffentlichungstag der Anmeldung: 30.12.1998
(73) Patentinhaber: Philips Intellectual Property & Standards GmbH, 20099 Hamburg (DE); Koninklijke Philips Electronics N.V., 5621 BA Eindhoven (NL)
(72) Erfinder: Bechtel, Helmut, Dr., Röntgenstrasse 24, 22335 Hamburg (DE); Czarnojan, Wolfram, Röntgenstrasse 24, 22335 Hamburg (DE); Mayr, Walter, Röntgenstrasse 24, 22335 Hamburg (DE); Jüstel, Thomas, Dr., Röntgenstrasse 24, 22335 Hamburg (DE); Nikol, Hans, Dr., Röntgenstrasse 24, 22335 Hamburg (DE); Ronda, Cornelis, Röntgenstrasse 24, 22335 Hamburg (DE)
(74) Vertreter: Volmer, Georg, Dipl.-Ing.

(56) Entgegenhaltungen:
- EP-A- 0 714 967
- WO-A-81/00031
- DATABASE WPI Section Ch, Week 198214, Derwent Publications Ltd., London, GB; Class L03, AN 1982-28055E, XP002011135 & SU 834 098 A (MIRONENKO V M) 02 Juni 1981
- ZANG L ET AL: "PHOTOCHEMISTRY OF SEMICONDUCTOR PARTICLES I. OPTICAL PROPERTIES OF ZNS SOLS" JOURNAL OF PHOTOCHEMISTRY AND PHOTOBIOLOGY, A: CHEMISTRY, Bd. 79, 1. Januar 1994, Seiten 189-195, XP000579326
- RESCH U ET AL: "ABSORPTION AND FLUORESCENCE BEHAVIOR OF REDISPERSIBLE CDS COLLOIDS IN VARIOUS ORGANIC SOLVENTS" LANGMUIR, Bd. 8, Nr. 9, 1. September 1992, Seiten 2215-2218, XP000579187

## Beschreibung

Die Erfindung betrifft einen Plasmabildschirm, mit einer Leuchtstoffzubereitung aus einem UV-Leuchtstoff mit einer Beschichtung.

Ein Plasmabildschirm besteht im Prinzip aus zwei Glasplatten, die durch Abstandshalter **5** miteinander verbunden sind und einen hermetisch verschlossenen Zwischenraum bilden. Der Zwischenraum ist mit einem Edelgas oder einer Edelgasmischung gefüllt. Der Zwischenraum enthält Anoden **3** in einer dielektrischen Schicht **4** und Kathoden, die gitterförmig senkrecht zueinander angeordnet sind. Zwischen den Kreuzungspunkten der Anoden und Kathoden wird eine Plasmaentladung gezündet. Die UV-Strahlung, die in der Plasmaentladung erzeugt wird, wird durch eine Leuchtstoffschicht **6** in rotes, grünes oder blaues Licht umgewandelt. Dieser Prozeß ist ähnlich wie der in Leuchtstoffröhren, aber durch die kleineren Dimensionen der einzelnen Plasmaentladungen bei einem Plasmabildschirm ist die Umwandlung der elektrischen Anregungsenergie in sichtbares Licht sehr viel weniger effizient als es in Leuchtstoffröhren der Fall ist.

Als Leuchtstoffe für Plasmabildschirme werden UV-Leuchtstoffe verwendet, die unter UV-Anregung besonders effizient sind. Es findet jedoch sowohl unter den Anregungsbedingungen in Fluoreszenzleuchtstoffröhren als auch besonders unter der Vakuum-UV-Anregung in Plasma Displays eine Degradation, d.h. eine Abnahme der Leuchtstoffeffizienz, mit der Anregungszeit statt.

Aufgabe der vorliegenden Erfindung ist es, einen Plasmabildschirm mit einer Leuchtstoffzubereitung aus einem UV-Leuchtstoff mit einer Beschichtung zu schaffen, die bei einer Anregung des Leuchtstoffes durch UV-Strahlung nicht degeneriert.

Erfindungsgemäß wird die Aufgabe gelöst durch einen Plasmabildschirm mit einer Leuchtstoffzubereitung aus einem UV-Leuchtstoff, ausgewählt aus der Gruppe der Aluminate, Borate, Oxide, Phosphate, Halophosphate, Sulfate, Wolframate, Tantalate, Vanadate, Molybdate, Niobate, Titanate, Germanate und Halide, mit einer Beschichtung, die ein oder mehrere catena-Polyphospate von ein oder mehreren Erdalkalimetallen, Zink, Cadmium und /oder Mangan enthält.

Überraschenderweise wurde gefunden, daß eine Beschichtung, die ein oder mehrere catena-Polyphospate von ein oder mehreren Erdalkalimetallen, Zink, Cadmium und/ oder Mangan enthält, als stabilisierender Schutzüberzug wirkt, der die Abnahme der Effizienz von UV-Leuchtstoffen, ausgewählt aus der Gruppe der Aluminate, Borate, Oxide, Phosphate, Halophosphate, Sulfate, Wolframate, Tantalate, Vanadate, Molybdate, Niobate, Titanate, Germanate und Halide, mit der Zeit unter UV-Anregung vermindert und transparent für UV- Licht ist. Darüber hinaus hemmt die erfindungsgemäße Beschichtung die Verschiebung des Farbpunktes unter UV-Anregung. Damit bleibt ein erfindungsgemäßer Plasmabildschirm lange Zeit hell und kontrastreich.

Die wasserfreien catena-Polyphosphate der oben genannten Art bilden eine harte, wasserunlösliche Beschichtung auf den Leuchtstoffpartikeln, sie reagieren nicht mit den UV-Leuchtstoffen und sie werden selbst durch Strahlung nicht degradiert. Da sie selbst farblos sind, beeinflussen sie auch nicht die Farbwerte der Leuchtstoffe. Sie sind hydrophil, so daß sich die beschichteten Partikel leicht dispergieren lassen.

Es ist auch bevorzugt, daß das oben genannte catena-Polyphosphat eine Kettenlänge von 3 bis 90 hat.

Im Rahmen der vorliegenden Erfindung kann es bevorzugt sein, daß die Beschichtung ein catena-Polyphospat eines Erdalkalimetalls und 0,1 bis 20 Gew.-% catena-Polyphosphat eines Metalls der Gruppe Zink, Cadmium und Mangan enthält.

Es ist weiterhin bevorzugt, daß das Erdalkalimetall wenigstens ein Metall aus der Gruppe Calcium, Strontium und Barium ist und die Beschichtung 5 Gew.-% Zink-catenapolyphosphat und/oder 5 Gew.-% Mangan-catena-polyphosphat enthält.
Ein kleiner Anteil an Cadmium, Zink oder Mangan in der Beschichtung wirkt sich positiv auf die Abscheidung der Beschichtung aus.

Die Leuchtstoffzubereitung kann auch eine Deckschicht aus einem Dispersionshilfsmittel aufweisen. An sich ist die erfindungsgemäße Beschichtung abriebfest, so daß der beschichtete Leuchtstoff als solcher transportiert und verwendet werden kann. Es ist jedoch üblich, daß Leuchtstoffpulver eine Deckschicht aus einem Dispersionshilfsmittel erhalten, das die Handhabung des Pulvers erleichtert. Da es sich gezeigt hat, daß Dispersionshilfsmittel, insbesondere solche, die oberflächlich gebundene Hydroxylgruppen enthalten, wie z.B. SiO₂, die Alterung der Leuchtstoffe noch verstärken, ist es besonders vorteilhaft, einen UV-Leuchtstoff, der eine Deckschicht aus einem Dispersionshilfsmittel wie SiO₂ aufweist, durch eine stabilisierende Zwischenschicht aus ein oder mehreren catena-Polyphosphaten der oben genannten Art zu schützen.

Aus dem gleichen Grund ist die Kombination aus einem UV-Leuchtstoff mit einer stabilisierenden Beschichtung aus ein oder mehreren der oben genannten catena-Polyphosphaten mit einer Deckschicht, die Pigmente enthält, insbesondere solche mit oberflächlich gebundenen Hydroxylgruppen, besonders vorteilhaft.

Es ist bevorzugt, das der UV-Leuchtstoff aus Ba(Al,Mg)₁₁O₁₉:Eu²⁺ besteht.

Die Erfindung betrifft weiterhin eine Leuchtstoffzubereitung aus einem UV-Leuchtstoff, ausgewählt aus der Gruppe der Aluminate, Borate, Oxide, Phosphate, Halophosphate, Sulfate, Wolframate, Tantalate, Vanadate, Molybdate, Niobate, Titanate, Germanate und Halide, mit einer Beschichtung, die ein oder mehrere catena-Polyphospate von Metallen der Gruppe der Erdalkalimetalle, Zink, Cadmium und Mangan enthält.

Nachstehend wird die Erfindung anhand zweier Figuren und eines Ausführungsbeispiels weiter erläutert.
**Fig. 1** zeigt einen Plasmabildschirm in schematischer Darstellung.
**Fig. 2** zeigt die verminderte Abnahme der Effizienz eines erfindungsgemäß beschichteten Aluminat-Leuchtstoffes **2** im Vergleich zu der Degradation dieses Leuchtstoffes ohne Beschichtung **1**.

Die UV-Leuchtstoffe, die gemäß der Erfindung mit einer stabilisierenden Beschichtung versehen werden, sind beispielsweise Aluminat - Leuchtstoffe auf der Basis von MeMgAl₁₀O₁₇ mit Me = Ba, Sr, Eu mit der β - alumina - Kristallstruktur, z.B. BaAl₁₀O₁₇:Eu (BAM), Ba(MgAl)₁₀O₁₇:Mn und BaAl₁₂O₁₉:Mn, sowie die Leuchtstoffe mit verwandter Kristallstruktur wie BaMgAl₁₆O₂₇:Eu und BaMgAl₁₄O₂₃:Eu. Weiterhin können auch Aluminat-Leuchtstoffe mit Magnetoplumbit-Struktur Me Al₁₂O₁₉ mit Me = Ca, Sr, Eu, bspw. Ba(Mg,Al)₁₁O₁₉:Eu, verwendet werden. Diese Aluminat-Leuchtstoffe sind besonders effiziente Leuchtstoffe unter UV- bzw. Vakuum-UV-Anregung.
Weitere UV-Leuchtstoffe, die gemäß der Erfindung mit einer stabilisierenden Beschichtung versehen werden können, sind Borate, z.B. MeB₂O₄, MeLnBO₄ MeLnB₃O₇, LnBO₃, LnMeB₂O₆, LnMe₃B₄O₁₂, Oxide, z.B. MeO, Ln₂O₃, MeLnO₂, Phosphate z.B. Me₃(PO₄)₂, Me₂P₂O₇, LnPO₄, Halophosphate, z.B. Me₅(PO₄)₃(F,Cl), Sulfate, z.B. MeSO₄, Wolframate, z.B. MeWO₄, Me₃WO₆, Ln₂W₃O₁₂, Tantalate z.B. LnTaO₄, Me₂LnTaO₆, Vanadate z.B. LnVO₄, Me₅(VO₄)₂Cl, Molybdate, z.B. MeMoO₄, Niobate, z.B. LnNbO₄, Titanate, z.B. Me₂TiO₄, MeTiO₃, Germanate z.B. MeGeO₃, Me₂GeO₄, Me₈Ge₂O₁₁F₂, und Halide z.B.MeF₂,MeCl₂SiO₂, MeBr₂/SiO₂, MeJ₂/SiO₂, LnOF, LnOCl, LnOBr; jeweils mit Me = Ca, Sr, Ba und Ln = In, Sc, Y, La, Ce, Pr, Nd, Sm, Eu, Gd, Tb, Dy, Ho, Er, Th, Yb, Lu.

Die Leuchtstoffe können als Primärpartikel oder als Latex und Pigmenten gemischte Granulate vorliegen. Die Korngröße der Leuchtstoffpartikel ist nicht kritisch. Die Primärkorngröße handelsüblicher Leuchtstoffe liegt bei etwa 2 bis 20µ.

Die Leuchtstoffpartikel werden mit einer dünnen und gleichmäßigen Schicht aus ein oder mehreren catena-Polyphosphaten von Metallen aus der Gruppe der Erdalkalimetalle, z.B. Magnesium, Calcium, Strontium, Barium, Zink, Cadmium und Mangan überzogen. Die Schichtdicke beträgt üblicherweise 0,001 bis 0,2µm und ist damit so dünn, daß Elektronen ohne wesentlichen Energieverlust durchdringen können. zusätzlich organische oder anorganische Bindemittel wie

Die Beschichtung kann zusätzlich organische oder anorganische Bindemittel wie Latex, Methylcellulose oder Aluminiumphosphat und SiO₂ enthalten, um die Dichtigkeit der Beschichtung noch zu verbessern und die Möglichkeit von chemischen Angriffen auf das Substrat einzuschränken.

Als Ausgangsverbindungen für die Beschichtung werden lösliche Alkali-Polyphosphate, Ammonium-Polyphosphate oder Alkylammonium-Polyphosphate sowie wasserlösliche Magnesium-, Calcium, Strontium- und/oder Bariumsalze eingesetzt, für die weiteren catena-Polyphosphate auch die wasserlöslichen Salze der zweiwertigen Kationen von Cadmium, Mangan und Zink.

Natriumpolyphosphat und Ammoniumpolyphosphat sind in großtechnischen Mengen käuflich, da sie auch als Düngemittel verwendet werden. Die übrigen löslichen Alkalipolyphosphate und die Alkylammoniumpolyphosphate können aus diesen käuflichen Polyphosphaten durch Ionenaustausch oder durch Reaktion von Polyphosphorsäure mit den entsprechenden Hydroxiden bzw. Aminen hergestellt werden.

Polyphosphate der hier verwendeten Art sind unverzweigte, kettenförmige Phosphate mit dem zweifach verknüpften PO₄-Tetraeder als Grundeinheit der Kette. Ihre systematische Bezeichnung ist "catena-Polyphosphate". Natriumpolyphosphate werden großtechnisch in einer Kondensationsreaktion aus den sauren, primären Salzen der Orthophosphorsäure gewonnen. Bei dieser Kondensationsreaktion wird Wasser abgespalten, der Wasserdampfdruck über der Schmelze, Heiztemperatur, Heizdauer und die Abkühlgeschwindigkeit bestimmen die Ketttenlänge und die Kristallinität des erhaltenen Polyphosphates. Man erhält stets Mischungen mit verschiedenen Kettenlängen. Je nach Reaktionsbedingungen erhält man Produkte, die die Trivialnamen "Grahamsches Salz", "Madrellsches Salz" (NaPO₃)ₓ oder "Kurrolsches Salz" (KPO₃)ₓ führen. Das "Grahamsche Salz" ist im Gegensatz zum praktisch unlöslichen "Madrellschen Salz" und dem wenig löslichen "Kurrolschen Salz" leicht wasserlöslich und seine Verwendung im Rahmen dieser Erfindung bevorzugt. Die Kettenlänge hängt sehr empfindlich von den genauen Herstellungsbedingungen ab, sie kann von Hersteller zu Hersteller, manchmal auch von Charge zu Charge schwanken. Die analytische Bestimmung der Kettenlängen ist zudem ziemlich aufwendig. Die Angaben über die durchschnittliche Kettenlänge in dem hier bevorzugt verwendeten "Grahamschen Salz" schwanken daher je nach Herkunft zwischen "12-18" und "bis 400". Hinreichend langkettige Polyphosphate unterscheiden sich in ihren chemischen Eigenschaften nur noch wenig voneinander und können deshalb alle gleichermaßen für die Erfindung verwendet werden. Eine obere Grenze für die Kettenlänge wird durch die Wasserlöslichkeit gesetzt. Die Wasserlöslichkeit nimmt mit zunehmender Kettenlänge ab und hängt auch von der Art des Kations ab. Andere wasserlösliche Polyphosphate, die ähnlich wie das "Grahamsche Salz" hergestellt werden und als "Phosphat Glas" oder "wasserlösliches Hexametaphosphat" bezeichnet werden, können ebenfalls verwendet werden. Für die Erfindung sind langkettige, wasserlösliche Polyphosphate mit einer mittleren Kettenlänge von 80 - 90 noch geeignet. Bei kurzkettigen catena-Polyphosphaten ändern sich die Eigenschaften der Polyphosphate in Richtung der Orthophosphate, da der Einfluß der endständigen Phosphatgruppen auf die chemischen Eigenschaften größer wird. Kurzkettige catena-Polyphosphate mit einer Kettenlänge < 3 sind für die vorliegende Erfindung nicht geeignet.

Als wasserlösliche Magnesium-, Calcium-, Strontium- Barium-, Cadmium-, Mangan- oder Zinksalze können insbesondere deren Nitrate, Acetate oder Perchlorate eingesetzt werden. Als wasserlösliche Zink- und Cadmiumsalze eignen sich deren Halogenide, insbesondere Chloride, und deren Sulfate, Nitrate oder Acetate. Diese Zink- und Cadmiumverbindungen werden einzeln oder gemeinsam in Wasser gelöst. Die Konzentration der Zink- oder Cadmiumsalze in der Lösung kann 0,01 bis 1 Mol/l betragen.

Zur Herstellung der Beschichtungslösung werden ein oder mehrere wasserlösliche catena-Polyphosphate einzeln oder gemeinsam in Wasser gelöst. Die Konzentration des Polyphosphates in der wässrigen Lösung kann je nach Kettenlänge und Kation 0,5 bis 10 Gew.-% betragen.

Üblicherweise wird als Lösungsmittel Wasser verwendet. Ein Anteil von 20 bis 90 Gew.-% eines organischen Lösungsmittels wie Ethanol, Methanol, Aceton usw. fordert zwar besondere Vorsichtsmaßnahmen, verbessert aber die Abscheidung der Polyphosphate. In solchen wässrig-organischen Lösungsmittelgemischen sind catena-Polyphosphate mit organischen quaternären Ammoniumionen wie Tetramethylammonium-Polyphosphat und Tetrabutylammonium-Polyphosphat noch sehr gut löslich. Alternativ dazu kann die Löslichkeit von Natrium-Polyphosphaten in solchen Lösungsmittelgemischen durch Zugabe von quartenären Ammoniumsalzen wie Tetramethylammoniumnitrat erhöht werden.

In diese Lösung wird der zu beschichtende Leuchtstoff 10 bis 30 min dispergiert.

Weiterhin wird eine Lösung eines wasserlöslichen Magnesium-, Calcium-, Strontium-, Barium,- Cadmium-, Mangan- und/oder Zinksalzes in Wasser in einer Konzentration von 1 bis 15 Gew.-% hergestellt.

Unter ständiger Kontrolle des pH-Wertes wird diese Lösung zu der Leuchtstoffsuspension hinzugefügt. Der pH-Wert muß im neutralen bis basischen Bereich, bevorzugt bei einem p-H-Wert zwischen 9,5 und 11,5 bleiben, wozu nötigenfalls Natronlauge oder Ammoniak zudosiert wird. Diese Suspension wird noch 1-5 h weiter gerührt, um die kolloidale Beschichtung irreversibel zu altern. Danach wird der beschichtete Leuchtstoff von der überschüssigen Beschichtungslösung abgetrennt, mit einer Waschflüssigkeit, z.B. Alkohol/Wasser, gewaschen und bei 100-150°C getrocknet. Durch dieses Verfahren wird eine mechanisch und chemisch sehr beständige Beschichtung erhalten, die fest an dem Substrat haftet.

Die so hergestellte Beschichtung hat üblicherweise eine Schichtdicke von 5 bis 100 nm. Durch ESCA- Messungen läßt sich feststellen, daß die Beschichtung die Leuchtstoffsubstrate vollkommen abdeckt, obwohl es für die Erfindung nicht wesentlich ist, daß die Beschichtung die Substratpartikel absolut dicht umschließt.

Die Beschichtung ist hydrophil und ist gut kompatibel mit den üblichen Beschichtungen, so daß es als Grundschicht für weitere Beschichtungen geeignet ist, die anschließend noch aufgebracht werden können, um die Pulvereigenschaften oder die Farbwerte des Werkstoffes zu verbessern.

Die Beschichtung selber zeigt keine Degradation. Insgesamt wird die Lebensdauer des UV-Leuchtstoffes und damit auch die des Plasmabildschirms durch die Beschichtung, wie sich durch ALT-Tests zeigen läßt, um den Faktor 5-10 gesteigert.

Besonders vorteilhaft ist es, wenn die Beschichtung zusätzlich SiO₂ enthält. Diese SiO₂-Beschichtung kann im Gemisch mit der catena-Polyphosphatbeschichtung vorliegen oder sie kann getrennt als Deckschicht auf diese Beschichtung aufgebracht werden. Durch die Beschichtung mit SiO₂ wird die Fliessfähigkeit des Pulvers weiter erhöht.

Je nachdem, welches Verfahren zur Herstellung der lumineszierenden Schirme angewendet wird, werden die beschichteten Leuchtstoffzubereitungen entweder "trocken", d.h. als trockenes Pulver oder "naß", d.h. suspendiert in einem Photoresist, eingesetzt. Beim Einsatz in einem "Naßverfahren" braucht das Leuchtstoffpulver nach dem Beschichten nicht als trockenes Pulver isoliert zu werden, sondern wird gleich in Lösung weiterverarbeitet. Anstatt den Leuchtstoff von der überschüssigen Beschichtungslösung abzutrennen, mit einer Waschflüssigkeit zu waschen und anschließend zu trocknen, wird dem in der Beschichtungslösung suspendierten Leuchtstoff ein Photoresist zugesetzt, die Leuchtstoff/Resist-Suspension als Film auf einem Substrat aufgebracht, getrocknet, durch eine Schattenmaske belichtet und die nicht belichteten Partien durch Waschen entfernt.

### Ausführungsbeispiel

Für ein typisches Ausführungsbeispiel wird 100 g BaAl₁₀O₁₇ : Eu²⁺ (BAM) in 100 ml aq. dest. dispergiert. Die Dispersion wird 3 min mit Ultraschall behandelt und anschließend unter Ultraschall 10 min gerührt. Eine Lösung von 2.04 g Natriumpolyphosphat in 100 ml aq. dest. wird zugefügt und die Suspension 2 min mit Ultraschall behandelt. Eine Lösung von 20 ml 1-molarer Ammoniaklösung und 3.54 g Ca(NO₃)₂.4 H₂O in 90 ml aq. dest. werden tropfenweise der Phosphorsuspension unter Ultraschall zugegeben und 2 min gerührt. Der pH - Wert der Lösung liegt bei etwa 9.7. Der so beschichtete Leuchtstoff wird durch Vakuumfiltration von der Suspension abgetrennt und zweimal mit 1 l Wasser-Aceton-Gemisch (50:50) gewaschen und unter Vakuum filtriert, dann mit Aceton gewaschen und bei 100 °C eine Stunde getrocknet. Anschließend wird der beschichtete Leuchtstoff mit einer Heizrate von 2.5°C/min auf 320°C aufgeheizt und eine Stunde bei 320°C gehalten, dann abgekühlt.

## Patentansprüche

1. Plasmabildschirm mit einer Leuchtstoffzubereitung aus einem UV- Leuchtstoff, ausgewählt aus der Gruppe der Aluminate, Borate, Oxide, Phosphate, Halophosphate, Sulfate, Wolframate, Tantalate, Vanadate, Molybdate, Niobate, Titanate, Germanate und Halide, mit einer Beschichtung, die ein oder mehrere catena-Polyphosphate von Metallen der Gruppe der Erdalkalimetalle, Zink, Cadmium und Mangan enthält.

2. Plasmabildschirm nach Anspruch 1,
**dadurch gekennzeichnet,**
**daß** catena-Polyphosphate eine Kettenlänge von 3 bis 90 haben.

3. Plasmabildschirm nach Anspruch 1,
**dadurch gekennzeichnet,**
**daß** die Beschichtung catena-Polyphosphat eines Erdalkalimetalles und 0,1 bis 20 Gew.-% catena-Polyphosphat eines Metalles der Gruppe Zink, Cadmium und Mangan enthält.

4. Plasmabildschirm nach Anspruch 1,
**dadurch gekennzeichnet,**
**daß** das Erdalkalimetall wenigstens ein Metall aus der Gruppe Calcium, Strontium und Barium ist und die Beschichtung 5 Gew.-% Zink-catena-Polyphosphat und/oder 5 Gew.-% Mangan-catena-Polyphosphat enthält.

5. Plasmabildschirm nach Anspruch 1,
**dadurch gekennzeichnet,**
**daß** die Leuchtstoffzubereitung eine Deckschicht aus einem Dispersionshilfsmittel aufweist.

6. Plasmabildschirm nach Anspruch 1,
**dadurch gekennzeichnet,**
**daß** die Leuchtstoffzubereitung eine Deckschicht mit einem Pigment aufweist.

7. Plasmabildschirm nach Anspruch 1,
**dadurch gekennzeichnet,**
**daß** der UV-Leuchtstoff aus Ba (Al, Mg)₁₁O₁₉:Eu²⁺ besteht.

8. Leuchtstoffzubereitung aus einem UV-Leuchtstoff, ausgewählt aus der Gruppe der Aluminate, Borate, Oxide, Phosphate, Halophosphate, Sulfate, Wolframate, Tantalate, Vanadate, Molybdate, Niobate, Titanate, Germanate und Halide, mit einer Beschichtung, die ein oder mehrere catena-Polyphosphate von Metallen der Gruppe der Erdalkalimetalle, Zink, Cadmium und Mangan enthält.

## Claims

1. A plasma display screen with a phosphor preparation of an UV-phosphor selected from the group consisting of aluminates, borates, oxides, phosphates, halophosphates, sulfates, wolframates, tantalates, vanadates, molybdates, niobates, titanates, germanates and halides with a coating, which coating includes one or more catena-polyphosphates of metals from the group comprising the alkaline earth metals, zinc, cadmium and manganese.

2. A plasma display screen as claimed in Claim 1, **characterized in that** catena-polyphosphates have a chain length of 3 to 90.

3. A plasma display screen as claimed in claim 1, **characterized in that** the coating comprises a catena-polyphosphate of an alkaline earth metal and 0.1 to 20% by weight of a catena-polyphosphate of a metal of the group formed by zinc, cadmium, and manganese.

4. A plasma display screen as claimed in Claim 1, **characterized in that** the alkaline earth metal is at least a metal of the group formed by calcium, strontium and 5% barium, and the coating comprises 5% by weight of zinc-catena-polyphosphate and/or 5% by weight of manganese-catena-polyphosphate.

5. A plasma display screen as claimed in Claim 1, **characterized in that** the phosphor preparation comprises a covering layer of a dispersion aid.

6. A plasma display screen as claimed in Claim 1, **characterized in that** the phosphor preparation comprises a covering layer with a pigment.

7. A plasma display screen as claimed in claim 1, **characterized in that** the UV-phosphor is composed of Ba(Al,Mg)₁₁O₁₉:Eu²⁺.

8. A phosphor preparation of an UV-phosphor selected from the group consisting of aluminates, borates, oxides, phosphates, halophosphates, sulfates, wolframates, tantalates, vanadates, molybdates, niobates, titanates, germanates and halides with a coating, which coating includes one or more catena-polyphosphates of metals from the group comprising the alkaline earth metals, zinc, cadmium and manganese.

## Revendications

1. Ecran au plasma avec une préparation de matière luminescente en une matière luminescente aux UV sélectionnée dans le groupe des aluminates, borates, oxydes, phosphates, halophosphates, sulfates, tungstanates, tantalates, vanadates, molybdates, niobates, titanates, germanates et halogénures avec un revêtement qui contient un ou plusieurs caténa-polyphosphates de métaux du groupe des métaux alcalino-terreux, du zinc, du cadmium et du manganèse.

2. Ecran au plasma selon la revendication 1,
**caractérisé en ce que** les caténa-polyphosphates ont une longueur de chaîne de 3 à 90.

3. Ecran au plasma selon la revendication 1,
**caractérisé en ce que** le revêtement contient un caténa-polyphosphate d'un métal alcalino-terreux et 0,1% à 20% en poids de caténa-polyphosphate d'un métal du groupe zinc, cadmium et manganèse.

4. Ecran au plasma selon la revendication 1,
**caractérisé en ce que** le métal alcalino-terreux est au moins un métal du groupe calcium, strontium et baryum et le revêtement contient 5% en poids de caténa-polyphosphate de zinc et/ou 5% en poids de caténa-polyphosphate de manganèse.

5. Ecran au plasma selon la revendication 1,
**caractérisé en ce que** la préparation de matière luminescente présente une couche de couverture en un adjuvant de dispersion.

6. Ecran au plasma selon la revendication 1,
**caractérisé en ce que** la préparation de matière de luminescente présente une couche de couverture avec un pigment.

7. Ecran au plasma selon la revendication 1,
**caractérisé en ce que** la matière luminescente aux UV se compose de Ba(Al,Mg)₁₁ O₁₉:Eu₂₊.

8. Préparation de matière luminescente à partir d'une matière luminescente aux UV sélectionnée dans le groupe des aluminates, borates, oxydes, phosphates, halophosphates, sulfates, tungstanates, tantalates, vanadates, molybdates, niobates, titanates, germanates et halogénures avec un revêtement qui contient un ou plusieurs caténa-polyphosphates de métaux du groupe des métaux alcalino-terreux, du zinc, du cadmium et du manganèse.
